# EUROPEAN PATENT APPLICATION

(11) **EP 2 489 909 A1**
(43) Date of publication of application: **22.08.2012**
(21) Application number: 11001321.6
(22) Date of filing: 17.02.2011
(51) Int. Cl.: F16K 17/04, F16K 37/00

(54) **Pressure relief valve**

(71) Applicant: Linde AG, 80331 München (DE)
(72) Inventor: Yussouf, Mohamed, Meadowbank NSW 2114 (AU)
(74) Representative: Kasseckert, Rainer

(57) **Abstract**

Pressure relief valve with an inlet (IN), and outlet (OUT) and a moveable piston (PI1), pressed by an element against its seat to close a passage between inlet (IN) and outlet (OUT) at normal working pressure in the fluid system, which will open the passage at a predetermined overpressure. For testing its function, it has got a second piston (PI2) fixed to the first piston (PI1) and a pilot valve (A) for putting a test pressure on the second piston (PI2) in a test pressure chamber.

## Description

The invention relates to a pressure relief valve according to the first part of claim 1.

It is known to provide relief valves on fluid systems working on a pressure which is higher than the ambient pressure. These systems use pressurized conduits or pressurized vessels. For example, relief valves are typically provided in such pressurized mechanisms like sterilizers, autoclaves, steamers, hardening or carburizing devices or tanks and in conduits for pressurized or liquefied gases as a safety device.

If the pressure of the fluids within the conduits or pressurized vessels increases significantly, the conduits or vessel may rupture, burst or otherwise fail. Therefore, relief valves are typically provided for allowing pressurized fluids within the conduits to be discharged from the system through the relief valve so that the fluid pressure in the system drops. As the fluid pressure drops, the conduits and vessel are prevented from bursting or otherwise failing. Typically relief valves are conventional check valves having a ball held by a spring against an orifice. As the pressure in the conduit increases it presses against the ball until the force of the fluid pressure overcomes the spring force and presses the ball away from the orifice. The pressurized fluid then passes through the unobstructed orifice and is thereby discharged from the conduit. The relief valve prevents the system from being over-pressurized, and thereby helps prevent the components of the pressurized mechanism from bursting or otherwise failing during operation.

Instead of a ball a piston or a disk can be used which are pressed by a force against a seat to close the passage between inlet and outlet. In this description we use the word piston, which should not be restricted to a piston alone, but can also have the meaning of a ball, a disk or a poppet or an equivalent element closing a passage in a pressurized system. The closing force can be imposed directly by a spring, a lever or a weight or can be imposed controlled by pneumatic, hydraulic or electro-magnetic elements. Also pilot-operated valves can be used.

It is desirable for an operator of such a pressurized mechanism to know that the relief valve is working properly and that the relief valve will discharge pressurized fluid at a pressure above that which would damage the conduits or tanks. It is therefore advantageous to know at what pressure the relief valve will blow. If that pressure is less than but close to the pressure that will cause the tank or conduits to fail, then the relief valve is still in good working condition. If that pressure is significantly higher than the pressure that will cause the tank or conduits to fail, then the relief valve is not in satisfactory condition and must be replaced or reconditioned. If that pressure is significantly less, that could cause process failure in the system.

Several methods have been devised for determining at what pressure the relief valve will be actuated. Some such methods involve taking readings of the force in the spring of the relief valve and then using this reading to calculate the pressure at which the relief valve will blow. These test mechanisms have the advantage of not requiring the removal of the relief valve from the mechanism. However, the calculations can be somewhat inaccurate that one need to know the physical properties of the spring. The calculations are based on presumptions, such as, that the ball will not stick to the orifice. If the ball of the relief valve is not in perfect operating condition and will stick, then the presumption is not correct, and the calculation will be inaccurate.

Other test methods involve removing the relief valve from the mechanism for bench testing. The relief valve is then mounted to a tester mechanism to determine the pressure at which the relief valve will blow. These bench test mechanisms have the advantage of allowing the operator to actuate the relief valve during the test so that inaccurate calculations and presumptions are not utilized and do not create inaccurate test results. In most bench tests only an inert fluid is used for safety or commercial reasons even though the actual operating fluid may toxic (e.g. Ammonia), flammable (e.g. Hydrogen) or an exotic fluid. Also bench testing is generally done only in ambient conditions while the actual valve may be working from minus 200 deg to plus 100 deg C. Thus it is impractical to bench test a relief valve in all of its true working conditions of the relief valve. While bench testing lend itself to reasonable results, it requires that the operator removes the safety valve from the pressurized mechanism, which can be time consuming, messy, complicated, and can result in downtime for the machine.

In the use of traditional relief valves there can be errors in specifications or design, like the confusion with the units PSI, Bar, kPA or the overlooking of the flow capacity. Also errors in manufacture or assembly can occur: same type valves have different spring ratings; so exist the possibility of assembling wrong parts. While 10-20 bar range is safe, 20-30 bar may not be safe. Improper packing for transit and storage can lead to debris in between the spring coils.

There can occur some errors in testing:
- Confusion with the units PSI or bar in specification, testing and certification
- Wrong units referred in pressure gauges
- Confused with multiplication factors in the measured units
- Transcript errors when testing a batch of relief valves but for different pressures
- Tendency to assume all ok ― a serious problem in mass production
- Most of the time tested for lift pressure only. Full lift stroke is not tested. So flow capacity is not known.
- Generally tested with water for any other liquid or even for gas or liquefied gases
- Generally tested with air for any other gas, particularly for toxic, flammable, oxidizing gases or other expensive gases like Helium
- Tested in controlled or laboratory conditions and not in real working conditions.

Additionally there are risks in installation:
- Someone can mix up inlet versus the outlet. Usually the safety valves are neglected after the installation until the next maintenance because they do not effect the normal operation.

And risks after installation can be:
- Inability to test after installation unless there is a means for higher pressure.
- Obstruction in spring movement over a period to time or
- Seizure of seat by corrosion or icing.
- Besides of these there are some maintenance problems:

The relief valve is tested routinely to comply with standards and regulatory requirements, industry practice or company policy. But one cannot test it while it is in service because creating the high pressure is practically not possible or would be unsafe (e.g. a high pressure can only be created because of high temperature or failure of a pressure reducer or a failure of control process and so on). It is not wise to create the high pressure without knowing the reliability of the relief valve. Even after testing, there is no certainty that the valve seat will lift to its full capacity because the planned maintenance might actually have caused the problems identified before.

Another method for testing a relief valve is the use of a mechanical lever for lifting the piston manually. This is an in-situ test using the so called "easing gear" for a simple, not high-risk installation. But this test only proves the mechanical movement, and does not prove anything with the lift pressure. So there is no guarantee that the valve will work when the abnormal high pressure occurs. It is also difficult to apply the lift force in a high pressure system.

Yet another method of testing the pressure at which the safety valve will be actuated involves increasing the pressure inside the system until the safety valve blows. An operator will slowly increase the pressure in the system while observing a pressure gauge to insure that the pressure remain below critical levels that might cause the conduits or tanks to fail. When the safety valve is actuated the operator will note the pressure of the system on the pressure gauge. The operator is thereby accurately informed of the pressure at which the safety valve will be actuated. The test is in situ such that the results will be quite accurate. No inaccurate calculations or presumptions are utilized to determine this pressure value. The safety valve is tested using the same fluid that is in the system during normal operation of the mechanism, thereby rendering relatively accurate test results. However, this type of test requires that the mechanism itself increase the fluid pressure applied to the relief valve, which places the system itself at risk of failure due to the increased pressure. Furthermore, increasing the pressure of the entire mechanism can be a lengthy process, as can be the resetting of the mechanism to its proper operating levels after the test.

US 5,856,615 discloses a test mechanism including a pivoting stop member having a first position whereat the stop member exposes the relief valve to the fluid system during normal operation of the system, and a second position whereat the stop member seals or isolates the relief valve from the fluid system during pressure tests of the relief valve. A pressure gauge is operatively positioned between the stop member and the relief valve for sensing the pressure being applied to the relief valve during a pressure test. A pressure applying mechanism such as an air hose from a pressurized air source applies pressure to the relief valve when the stop member is in its second position. A barrier positioned between the pressure applying mechanism and the relief valve prevents fluids other than fluid within the fluid system from engaging the relief valve when the pressure applying mechanism is actuated. This mechanism is not in-expansive and needs an external pressure source. Also there is a risk of putting the system in unsafe condition when the stop member is in second position that isolates the fluid from the relief mechanism.

Therefore, it would be desirable to provide a relief valve for pressurized systems that allows such relief valve to be tested in place without requiring removal of the relief valve from the pressurized system. It would also be desirable for such a mechanism to test the relief valve while engaging the relief valve with fluid that is actually present in the pressurized system such that the test conditions replicate actual operating conditions. This would render more accurate test results. It would be desirable for such a mechanism to eliminate the need for calculations or interpolations, and that does not depend on presumptions such as that the ball will not stick in the relief valve. It would also be desirable for such a mechanism to reduce or eliminate the risks of failure of the fluid system components during such a pressure test.

These problems are solved by a relief valve with the features of claim 1. Embodiments of the invention are objects of the depending claims.

Core idea of the invention is to provide a second piston which is fixed permanently with the first piston and a pilot valve to allow a fluid to put a test pressure on the second piston in a test pressure chamber. If the force of the test pressure is higher than the closing force of the closing element, the relief valve will open and its function is verified.

In one embodiment a pressure release valve is provided for venting the pressure chamber. This allows a smooth working and a fast return to the normal state.

The test pressure can come from a external pressure source like a pump or a bottle or a conduit and should have a predetermined value. The pressure is attuned to the active area of the second piston. If the second piston has the right area, the pressure of the test system has not to exceed the normal pressure of the fluid system. As this pressure is only available in the test pressure chamber there is no stress applied to the rest of the fluid system.

In a preferred embodiment the internal pressure of the fluid system can be used for testing. This is possible, if the internal pressure is not only working on the first piston but also acting on the second piston. The pressure force on both pistons then exceeds the closing force of the spring and the valve is blowing. Assumed that the closing spring force is 120 % of the pressure force of the fluid system at normal conditions the additional area should be a little bit more than 20 % of the area of the first piston. If the normal pressure is then allowed to act on the second piston the added pressure forces are greater than the closing force and the valve is opening. This has the advantage that no special or external pressure sources are necessary. Only a pilot valve is necessary, which opens a passage from the normal fluid system to the test pressure chamber. The costs for investigation and for operation are minimal. No additional stress is applied to the fluid system.

In another preferred embodiment the pilot vent is integrated in the element with the both pistons. This has the advantage, that there is no need for additional place.

Further embodiments of the invention are explained in more detail by means of the accompanying drawings.

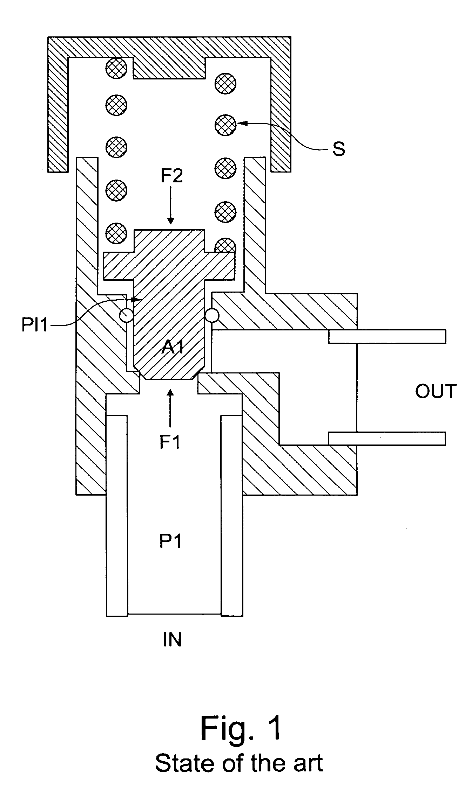

**Figure 1** shows a pressure relief valve of the state of the art. It has a body with an inlet IN and an outlet OUT and a movable piston Pl1. A spring S, which is trapped between an adjusting screw in the bonnet and the piston Pl1, is pressing the piston Pl1 with the closing force F2 on his seat. The pressure P1 of the fluid system exerts the force F1 = A1 x P1 on the area A1 of the piston Pl1. Assumed that the spring force on the seat F2 = 120 % x F1 the force exerted by the spring S is greater than the force F1 from the internal pressure of the system, the valve remains closed. Please note, that the 120 % is only an example. Other figures can be chosen, if the pressure in the fluid system is rising and is exceeding 120 % of F1, the relief valve is opening and the fluid is discharged from the system through the outlet OUT.

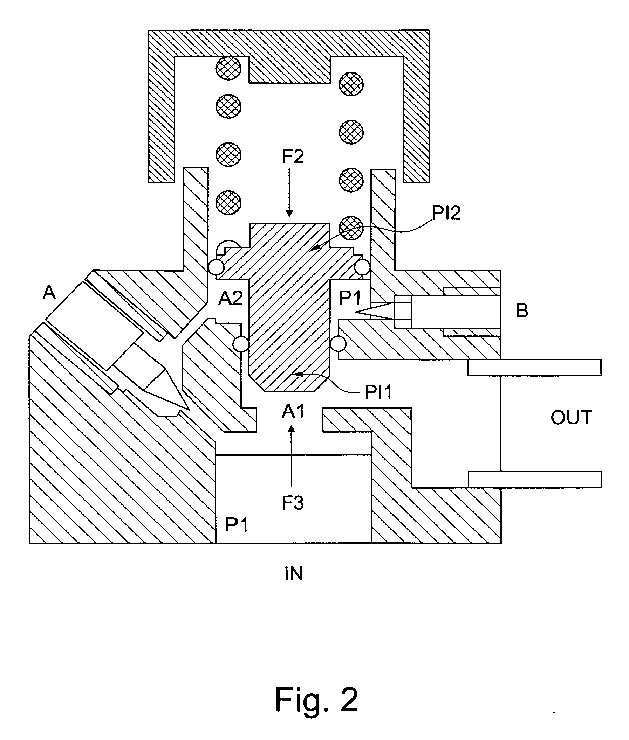

**Figure 2** shows an embodiment of the invention: A second piston Pl2 with the active area A2 is added to the piston Pl1. A passage which can be closed by a pilot valve A is arranged between the inlet IN and the test pressure chamber beneath the second piston Pl2. This pilot valve A is closed in normal state and prevents fluid from flowing into the test pressure chamber. In figure 2 the relief valve is shown in the state of testing. In this case the pilot valve A is opened and allows the fluid with the pressure Pl1 to flush into the test pressure chamber. In this chamber the fluid exerts an additional force to the second piston Pl2. This force added to F3 at Pl1 and results in a upward force higher than the closing force F2 of the spring. The additional area A2 can be 10 to 50 %, especially 10 to 40 %, preferred 20 % of A1. This causes a lifting of the entity of the both pistons Pl1 and Pl2. Pl1 is lifted from its seat and opens the passage between inlet IN and outlet OUT for blowing the fluid out of the system. In this status the pressure release valve B is closed. For getting back to the normal status the pilot valve A is closed and the release valve B is opened. Then the spring S closes the passage.

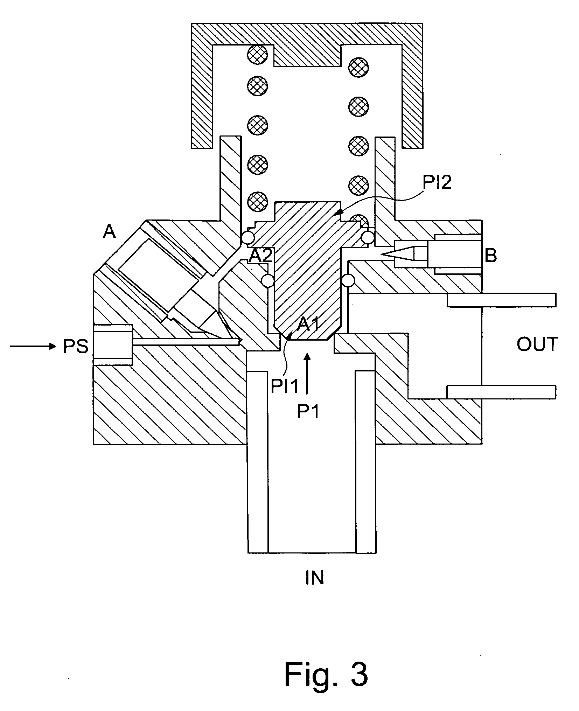

**Figure 3** shows an variation of the inventive pressure relief valve. This embodiment shows a pressure inlet P2 for an external pressure. By opening of the pilot valve A the external pressure P2 comes up to the pressure testing chamber, impinges on the piston Pl2 and helps opening the valve, if the external pressure P2 is high enough.

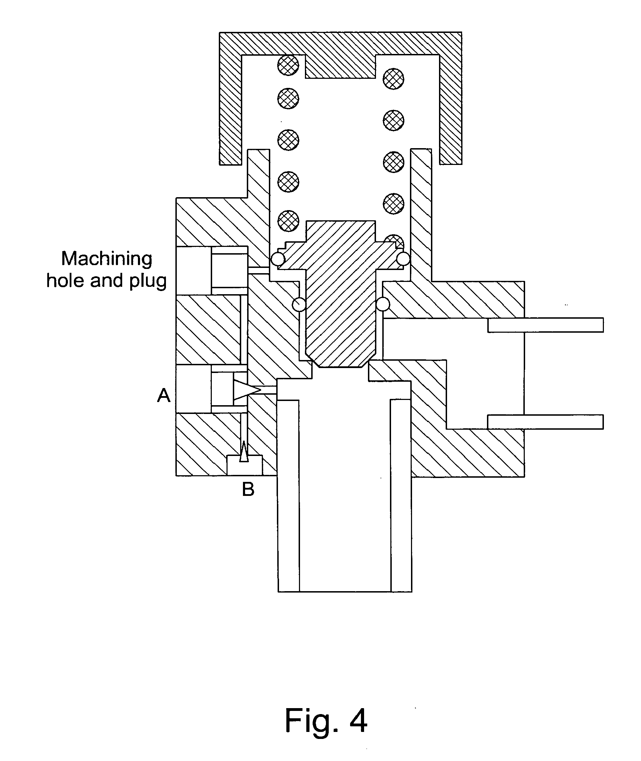

**Figure 4** shows another variation of the inventive pressure relief valve which can be tested by internal and external pressure. External pressure can be lead through a machining hole and plug into the pressure test chamber. Internal pressure of the fluid system can be used by closing the machining hole by a plug and by opening the pilot valve A which allows the fluid of the pressure system to flow into the test pressure chamber and to exert a force on the area A2 of the second piston Pl2.

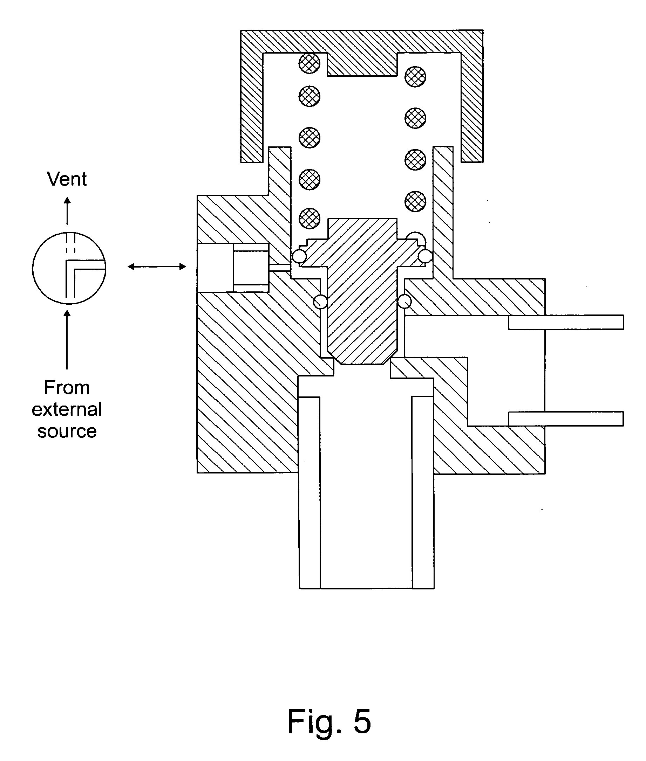

**Figure 5** shows another variation, where a three way valve is used. This three way valve allows pressure from an external source to vent the test pressure chamber and can be used for venting. The diametrical seal in the pistons ensure the pressure does not enter to the other chamber.

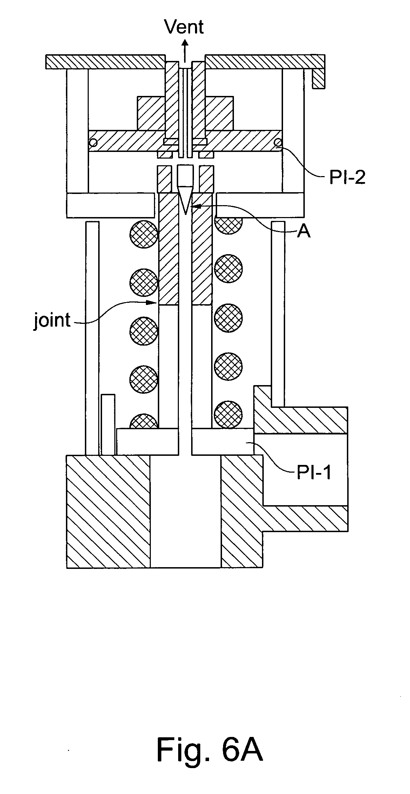

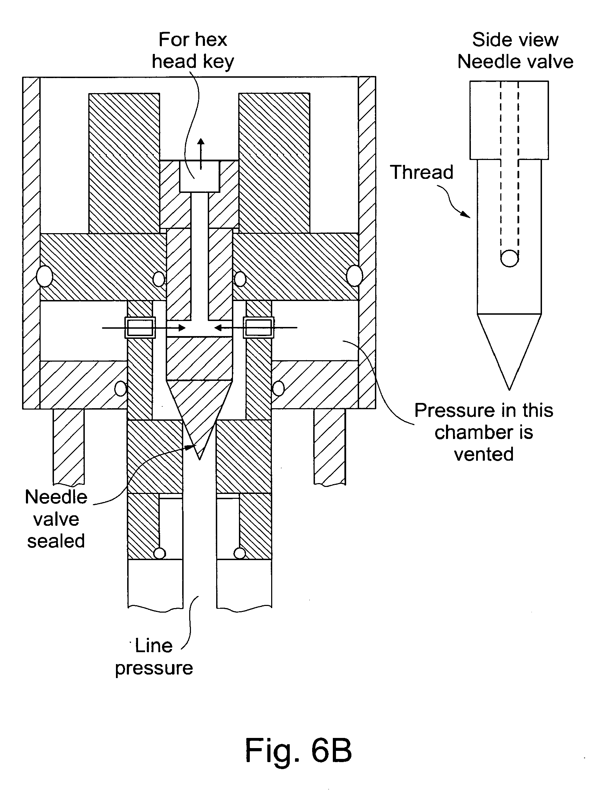

**Figure 6a** shows another embodiment: The pilot valve A is a needle valve that can also operate as the pressure release, integrated in the system of the two pistons Pl1 and P12. Figures 6a and 6b show the embodiment in the normal (closed) working state. In this situation the valve A is closed and the spring S forces the combination of the two pistons Pl1 and Pl2 against its seat and closes the system. Not shown in the figure is a laptop which can be connected with two pressure sensors, in the fluid system and in the test pressure chamber. The laptop is a typical example only. It can be any other calculating device that works out the expected relief pressure using the valve factor 'Y' and the measured pressures in Pl1 and P12. For an easier assembling the unit of the two pistons Pl1 and Pl2 is made out of two parts which are joint together after assembling the spring S.

**Figure 6b** shows in detail the needle valve and the directions of flow when venting the test pressure chamber through openings and the needle.

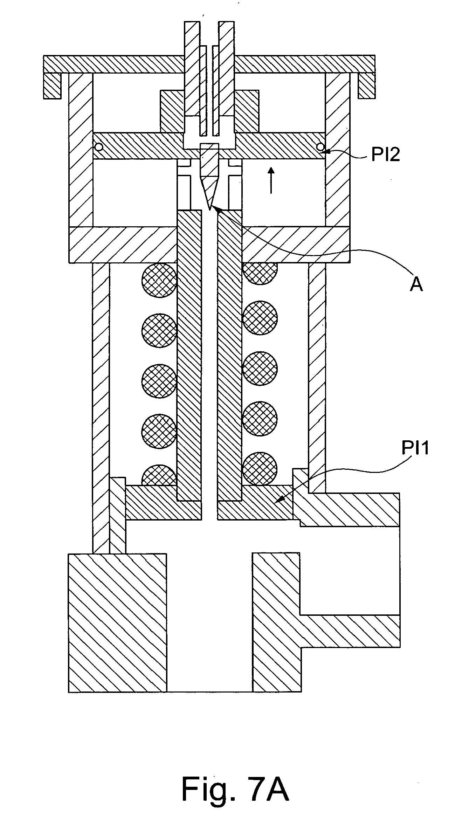

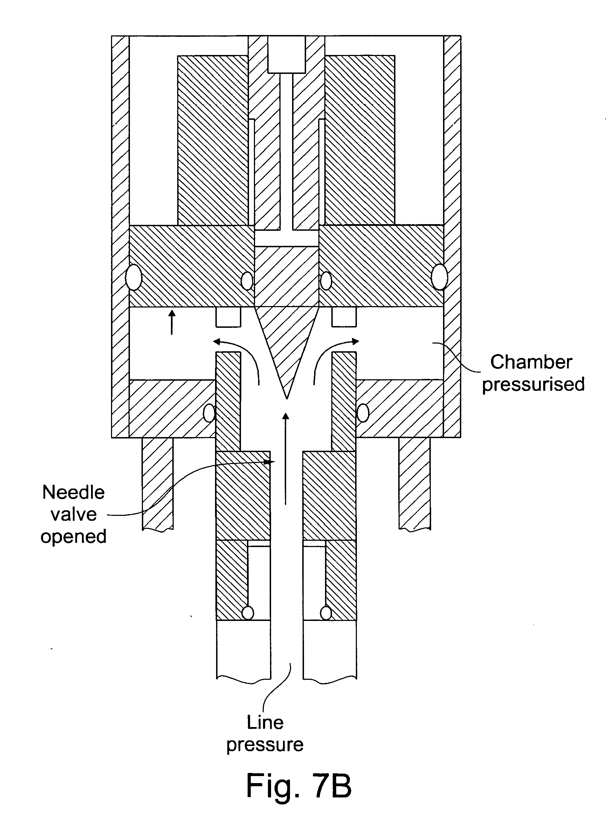

**Figure 7** a and b show the same valve as figures 6a and b but in the state of testing. In this state the pilot valve A is opened and allows the fluid of the system to flow into the test pressure chamber and to exert an force on the area A2 of the second piston Pl2. This leads to an upward movement and an opening of the passage between inlet IN and outlet OUT. The valve act as an three-way valve. When raised up as shown in figures 7 a and b, the vent through the needle is closed and the chamber is pressurized.

**Figure 7b** shows in detail the flow of the fluid in the test state. The test pressure chamber is now pressurized. As pressure increases, it will lift the piston Pl2.

As the needle valve turned from closed-to open or from open-to-close, the line pressure will vent during the transition. However, the hole in the needle valve is so small, this can be operated very quickly.

When the valve is closed again, the chamber pressure is released and so the spring pushes the pistons Pl1 and Pl2 down.

Excluding frictional factors, the force exerted on pistons Pl1 and Pl2 are the multiplications of their respective areas times their pressures. In all the above examples, the ratio of piston areas A2 and A2 remains constant for a particular design of the relief valve. When this ratio is determined as a constant factor "Y" and verified during calibration of the valve for a particular design of a relief valve, the expected relief pressure can be calculated using formule given below.

**For valves to be tested with internal pressure only**, the factor "Y" can be determined during manufacturer's calibration of the valve by applying the formula "Y" = (P3 - P1) ÷ P1, where P3 is calibrated relief pressure without pilot pressure andP1 is the line pressure that is also the pilot pressure used to lift the spring

In the field, the above formula is reversed for any line pressure "P_{L}" and the expected relief pressure can be calculated as P_{L} + P_{L} x Y

**For valves to be tested with external pressure**, the factor "Y" can be determined during manufacturer's calibration of the valve by applying the formula "Y = (P3 - P1) ÷ P2 ", where P3 is calibrated relief pressure without pilot pressure, P1 is the line pressure applied on piston Pl1 and P2 is the pilot pressure applied on piston Pl2

In the field, the above formula is reversed for any line pressure "P_{L}" and pilot pressure "Pp" the expected relief pressure can be calculated as P_{L} + P_{P} x Y

It must be noted that the use of factor Y is in the same principles of using flow coefficient 'Cv' for a valve to calculate the estimated flow. There will be minor variations between expected result and the actual result. However one gets the confidence that the relief valve will operate within this minor variation.

## Claims

1. Pressure relief valve with an inlet (IN), an outlet (OUT) and a moveable piston (Pl1), pressed by an element against its seat to close a passage between inlet (IN) and outlet (OUT) at normal working pressure in the fluid system, which will open the passage at a predetermined overpressure, **characterized by** a second piston (Pl2) fixed to the first piston (Pl1) and a pilot valve (A) for putting a test pressure on the second piston (Pl2) in a test pressure chamber.

2. Pressure relief valve according to claim 1, **characterized by** a pressure release valve (B) in connection to the test pressure chamber.

3. Pressure relief valve according to claim 1 or to claim 2, **characterized by** a port for an external pressure source.

4. Pressure relief valve according to one of the preceding claims, **characterized by** a conduit to allow the flow of the fluid system to act on the second piston (Pl2).

5. Pressure relief valve according to one of the preceding claims, **characterized by** the integration of the pilot valve (A) and/or release valve in one needle valve assembly (A) in the unit of both pistons (Pl1, Pl2).
